# EUROPEAN PATENT APPLICATION

(11) **EP 0 779 396 A1**
(43) Date of publication of application: **18.06.1997**
(21) Application number: 96118999.0
(22) Date of filing: 27.11.1996
(51) Int. Cl.: E01C 23/088, B65G 15/22

(54) **Self-propelled road scarifier**

(30) Priority: 12.12.1995 IT BO950585
(71) Applicant: BITELLI SPA, 40061 Minerbio (BO) (IT)
(72) Inventor: Puglia, Ubaldo, 40055 Castenaso, Prov. of Bologna (IT)
(74) Representative: Modiano, Guido, Dr.-Ing.

(57) **Abstract**

A road scarifier comprising a self-propelled vehicle (1) whereon an ascending conveyor (4) for the removed material is installed, a transfer system (13) that can be orientated on a horizontal plane by actuation elements (17-19; 20-26; 27-30; 31-33) being provided at the end of the conveyor (4).

## Description

The present invention relates to a self-propelled road scarifier with improved features.

Conventional road scarifiers are machines that remove the surface layer of the road covering when it is necessary to dress it. The road covering is removed by means of a rotating mill which, by rotating, breaks up the material and deposits it on an ascending conveyor. The conveyor discharges the material into the body of a truck, which carries it to reuse points. Reuse usually occurs in a drier-mixer, wherein the material is softened and mixed with fresh bituminous mix.

Conventional scarifiers have operating limitations as regards the ability to direct the discharge outlet of the conveyor on the body of the truck that must receive the material. Very often, because of space problems, the truck in fact cannot be moved close to the scarifier in the point meant for material discharging.

Conventional scarifiers also have drawbacks in the steering system and in the steered wheels that make steering unsatisfactory.

A principal aim of the present invention is therefore to provide a scarifier that allows to obviate the drawbacks of currently commercially available scarifiers in relation to the possibility of orientating the discharge of the removed material from the conveyor according to requirements.

Within the scope of this aim, an object of the present invention is to provide a support for the steered wheels that is more effective from a constructive point of view and from the point of view of the prerogatives that steering is required to have.

This aim and this object are achieved by a road scarifier comprising a self-propelled vehicle whereon an ascending conveyor for the removed material is installed, characterized in that a transfer system that can be orientated on a horizontal plane by actuation means is provided at the end of said conveyor.

Further characteristics and advantages of the present invention will become apparent from the following detailed description of some preferred embodiments thereof, illustrated only by way of non-limitative example in the accompanying drawings, wherein:
figure 1 is a lateral elevation view of a scarifier according to the present invention;
figure 2 is a plan view of the scarifier of figure 1;
figures 3, 4, 5, and 6 are side views of a corresponding number of different embodiments of the actuation means of the transfer system; and
figures 7, 8, 9, and 10 are plan views of the embodiments of figures 3, 4, 5, and 6 respectively.

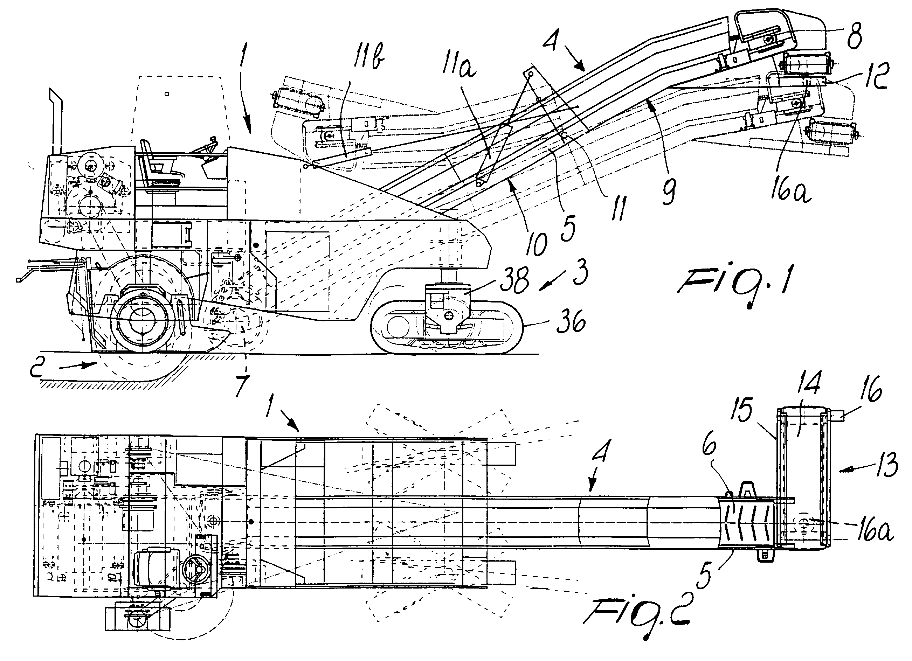

With reference to figures 1 and 2, the scarifier comprises a self-propelled vehicle 1, which is provided at the rear with a scarification mill 2 and at the front with a steering and support system 3 for the self-propelled vehicle. The reference numeral 4 designates an ascending conveyor which cantilevers forward from the self-propelled vehicle 1.

Conveyor 4 is composed of an elongated frame 5, which supports a moving belt 6, which is closed in a loop on a driving roller 7 and a guiding roller 8 and is actuated by a drive unit, not shown in the drawing. The conveyor 4 can be tilted about the axis of the driving roller 7 and is constituted by two segments 9 and 10 that are articulated one another at an axis 11; the first segment 9 can be folded over onto the second segment 10 by means of a jack 11a. The conveyor 4 can be raised or lowered by means of a jack 11b that acts between segment 9 and vehicle 1. Figure 1 shows, in dashed lines, the more compact position of the scarifier, in which segment 9 is folded over onto segment 10. A bracket 12 protrudes forward from the end of the frame 5 and is fixed to the frame of segment 9. Bracket 12 protrudes beyond the guiding roller 8 of the belt 6, and a transfer system 13 is rotatably supported on the bracket. The transfer system, too, is constituted by a belt 14 which is closed around two rollers supported by a frame 15, one roller being actuated by a drive unit 16.

The rotation axis of transfer system 13 is constituted by a shaft 16a that protrudes downwards from one end of the frame 15 and is rotatably supported in a support of the bracket 12.

A plurality of actuation means, shown in figures 3 to 10, is provided for the orientation of the transfer system 13 with respect to the conveyor 4.

Figures 3 and 7 illustrate an embidiment in which a gear system is provided which is composed of a gear 17 that is keyed to the rotation shaft 16a of the transfer system 13 and meshes with a pinion 18 which is keyed on the output shaft of a drive unit 19 mounted on the bracket 12. The actuation of the drive unit 19 allows to orientate the transfer system 13 through ±90^{o} with respect to the axis of the conveyor 4.

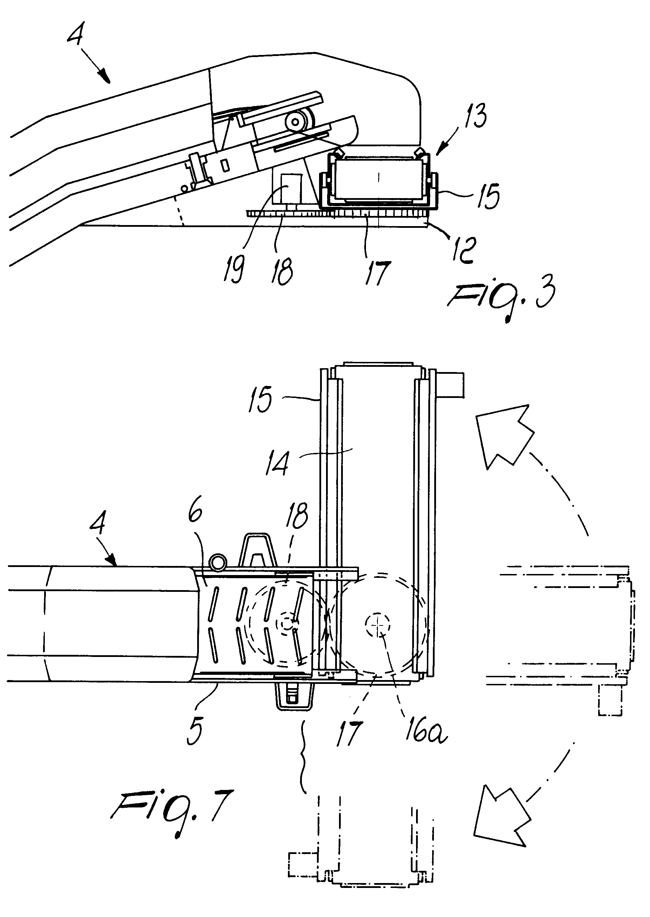

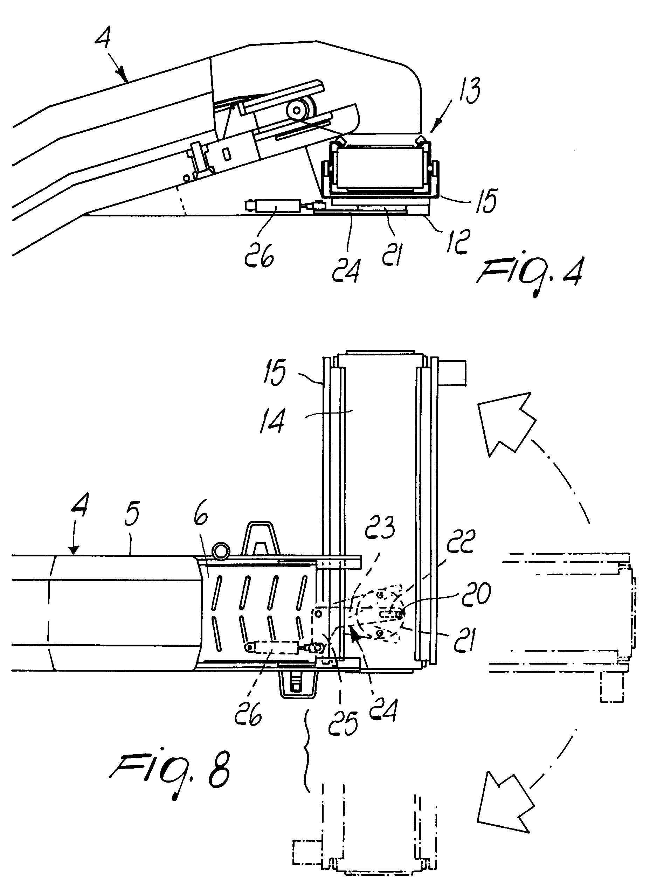

The embodiment of figures 4 and 8 comprises a pivot 20, which is fixed eccentrically on a disk 21 that is keyed on the rotation shaft 16a of the transfer system 13. The pivot 20 engages a slot 22 formed in the arm 23 of a lever 24 that is pivoted on the bracket 12. The second arm 25 of the lever 24 is articulately connected to an actuation jack 26, which is rigidly coupled to the bracket. The pivot 20 and the slot 22 form a slot link, which allows to convert the oscillation of the lever 24, caused by the jack 26, into a rotary motion of the shaft 16a.

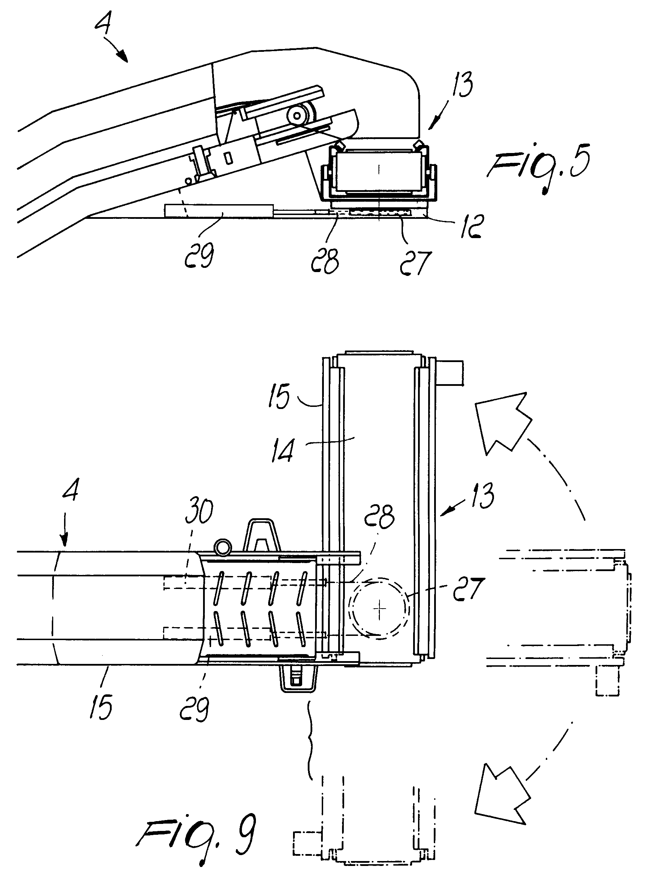

In the embodiment of figures 5 and 9, a toothed pulley 27 is keyed on the shaft 16 and meshes peripherally with a chain 28. The opposite ends of the chain 28 are connected to two respective jacks 29 and 30 that are mounted on the bracket 8. It is evident that rotation of the transfer system in one direction or the other is achieved by actuating the jacks 29 and 30 alternately.

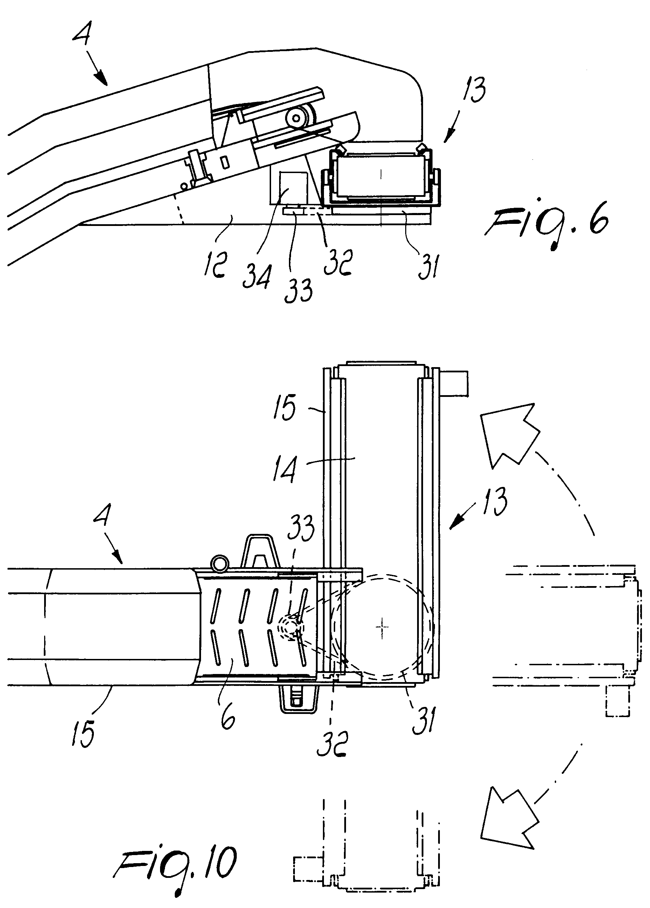

Finally, in the embodiment of figures 6 and 10 there is provided a toothed wheel 31, which is keyed to the shaft 16a and meshes with a chain 32 which is closed in a loop around a pinion 33 keyed on the output shaft of a drive unit 34 capable of imparting to the pinion 33 a rightward or leftward movement, depending on the direction in which the toothed wheel 31 and therefore the transfer system 13 have to be turned.

It is evident from the above description that the orientation of the transfer system 13 with respect to the conveyor 4, combined with the vertical adjustment of the conveyor, allows to position the outlet of the conveyor 13 exactly on the discharge point.

The materials and the dimensions that constitute the individual components of the scarifier may of course be the most pertinent according to the specific requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A road scarifier comprising a self-propelled vehicle (1) whereon an ascending conveyor (4) for the removed material is installed, characterized in that a transfer system (13) that can be orientated on a horizontal plane by actuation means (17-19; 20-26; 27-30; 31-33) is provided at the end of said conveyor (4).

2. A road scarifier according to claim 1, characterized in that a bracket (12) protrudes forward from the uppermost end of the frame (5) of the conveyor (4), the transfer system (13) being rotatably supported on said bracket, said transfer system (13) being constituted by a belt (14) which is closed around a guiding roller and a driving roller, which are supported by a frame (15) which has a shaft (16a) which is rotationally rigidly coupled at one of its ends and is rotatably supported in said bracket (12), drive means (16) mounted on said frame (15) being provided for the orientation of the transfer system (13) with respect to the conveyor (4).

3. A road scarifier according to claim 2, characterized in that said actuation means comprise a gear system composed of a gear (17) which is keyed on said rotatable supporting shaft (16a) of the transfer system (13) and meshes with a pinion (18) keyed on the output shaft of a drive unit (19) that is installed on said bracket (12), the actuation of the drive unit (19) being adapted to allow to orientate said transfer system (13) through approximately ±90^{o} with respect to the axis of the conveyor (4).

4. A road scarifier according to claim 2, characterized in that said actuation means comprise a pivot (20) which is fixed eccentrically to a disk (21) that is keyed on the rotatable supporting shaft (16a) of the transfer system (13) and engages a slot (22) formed in the arm (23) of a lever (24) which is pivoted to said bracket (12), the second arm (25) of said lever (24) being articulately connected to an actuation jack (26) mounted on said bracket (12), said pivot (20) and said slot (22) being shaped so as to produce a slot link, which allows to convert the oscillation of said lever (24) produced by said jack (26) into a rotary motion of the shaft (16a) of the transfer system (13).

5. A road scarifier according to claim 2, characterized in that a toothed pulley (27) is keyed on the rotatable supporting shaft (16a) of the transfer system (13) and meshes peripherally with a chain (28), the opposite ends of said chain (28) being connected to two respective jacks (29, 30) mounted on said bracket (12) so that, by alternately actuating the jacks (29, 30), rotation of the transfer system (13) in one direction or the other is performed.

6. A road scarifier according to claim 2, characterized in that said actuation means comprise a transmission composed of a toothed wheel (31), which is keyed on the rotatable supporting shaft (16a) of the transfer system (13) and meshes with a chain (32) which is closed in a loop around a pinion (33) which is keyed on the output shaft of an alternative drive unit (34) capable of giving said conveyor (13) a rightward or leftward motion by means of said transmission.
